# EUROPÄISCHE PATENTSCHRIFT

(11) **EP 3 738 870 B1**
(45) Veröffentlichungstag und Bekanntmachung des Hinweises auf die Patenterteilung: **29.12.2021**
(21) Anmeldenummer: 20170506.8
(22) Anmeldetag: 21.04.2020
(51) Int. Cl.: B64C 1/14, B64D 29/06, E05B 15/02

(54) **VERRIEGELUNGSSYSTEM FÜR EINE FAHRZEUGTÜR**
LOCKING SYSTEM FOR A VEHICLE DOOR
SYSTÈME DE VERROUILLAGE POUR UNE PORTE DE VÉHICULE

(30) Priorität: 16.05.2019 DE 102019207125
(43) Veröffentlichungstag der Anmeldung: 18.11.2020
(73) Patentinhaber: Airbus Operations GmbH, 21129 Hamburg (DE)
(72) Erfinder: Martin, Alexander, 21129 Hamburg (DE)
(74) Vertreter: Isarpatent

(56) Entgegenhaltungen:
- EP-A1- 2 759 468
- DE-A1- 4 210 893
- DE-U1-202004 005 176

## Beschreibung

Die vorliegende Erfindung betrifft ein Verriegelungssystem mit einer doppelt exzentrischen Bolzenanordnung für eine Fahrzeugtür. Die vorliegende Erfindung betrifft ferner ein Luft- oder Raumfahrzeug mit einem derartigen Verriegelungssystem.

Obwohl in vielfältigen Anwendungen einsetzbar, werden die vorliegende Erfindung sowie die ihr zugrunde liegende Problematik in Bezug auf Passagierflugzeuge näher erläutert. Die beschriebenen Verfahren und Vorrichtungen können jedoch ebenso in unterschiedlichen Fahrzeugen und in allen Bereichen der Transportindustrie, beispielsweise für Straßenfahrzeuge, für Schienenfahrzeuge, für Luftfahrzeuge oder für Wasserfahrzeuge eingesetzt werden.

Frachtraumtüren von Passagier- oder Transportflugzeugen werden typischerweise über eine Verriegelung verschlossen, bei der mehrere als Haken ausgebildete Riegel in einer Reihe an einer unteren Innenseite der jeweiligen Tür angebracht sind und zum sicheren Verschließen der Tür entsprechend ausgebildete Bolzen umgreifen, die fest an einem Türrahmen der Frachtraumtür montiert sind. Derartige Verriegelungssysteme werden beispielsweise von den Druckschriften US 2,748,855 A, US 4,473,201 A, US 4,497,462 A und US 4,395,000 A gelehrt. EP 2 759 468 A1 offenbart ein Verriegelungssystem mit einem Türrahmen, einer Flugzeugtür und mehreren Beschlägen. Jeder Beschlag weist zwei Lagerschenkel mit jeweils einem Lagerdurchgangsloch auf. In jedem Beschlag ist ein Lagerbolzen in diesen Löchern gelagert. Riegel an der Türe können mit den Lagerbolzen in Eingriff gebracht werden. In DE 42 10 893 A1 dient die Exzentrizität der Verstellung eines Lagerbolzens als Teil einer Zuziehhilfe. DE 20 2004 005176 U offenbart einen exzentrischen Verriegelungszapfen für eine Gebäudetür oder ein Fenster.

Vor diesem Hintergrund liegt der vorliegenden Erfindung die Aufgabe zugrunde, Lösungen für eine vereinfachte und leichtgewichtige Verriegelung für eine Fahrzeugtür mit möglichst wenig Einzelkomponenten zu finden.

Erfindungsgemäß wird diese Aufgabe gelöst durch ein Verriegelungssystem mit den Merkmalen des Patentanspruchs 1 und durch ein Luft- oder Raumfahrzeug mit den Merkmalen des Patentanspruchs 9.

Demgemäß ist ein doppelt exzentrisches Verriegelungssystem für eine Fahrzeugtür vorgesehen. Das Verriegelungssystem umfasst einen Türrahmen, welcher einen ersten Lagerschenkel mit einem ersten Lagerdurchgangsloch und einen zweiten Lagerschenkel mit einem zweiten Lagerdurchgangsloch aufweist; einen exzentrischen Lagerbolzen mit einem ersten Lagerende und einem zweiten Lagerende, wobei das erste Lagerende zur Aufnahme in dem ersten Lagerdurchgangsloch und das zweite Lagerende zur Aufnahme in dem zweiten Lagerdurchgangsloch ausgebildet ist, wobei der exzentrische Lagerbolzen einen Mittelzylinder zwischen den beiden Lagerenden aufweist, welcher exzentrisch zu einer durch die beiden Lagerenden führenden Längsachse des Lagerbolzens ausgebildet ist, wobei der Lagerbolzen an dem ersten Lagerende einen ersten Außenzahnkranz und an dem Mittelzylinder einen zweiten Außenzahnkranz aufweist; eine exzentrische Lagerbuchse mit einem Mitteldurchgang, welcher zur gleitenden Aufnahme des Mittelzylinders des Lagerbolzens ausgebildet ist, und mit einem Zylindermantel, welcher den Mitteldurchgang exzentrisch umgibt, wobei der Mitteldurchgang einen ersten Innenzahnkranz aufweist, welcher komplementär zu dem zweiten Außenzahnkranz des Lagerbolzens ausgebildet ist; eine Befestigungsscheibe, welche zur Befestigung an dem ersten Lagerschenkel und mit einem Durchgangsloch zur Aufnahme des ersten Lagerendes des Lagerbolzens ausgebildet ist, wobei die Befestigungsscheibe einen zweiten Innenzahnkranz in dem Durchgangsloch aufweist, der komplementär zu dem ersten Außenzahnkranz des Lagerbolzens ausgebildet ist; eine Riegelhülse, welche zur gleitenden Aufnahme der Lagerbuchse ausgebildet ist; und eine Fahrzeugtür, welche einen Riegel aufweist, der zum Umlegen um die Riegelhülse zum Verriegeln der Fahrzeugtür mit dem Türrahmen ausgebildet ist.

Weiterhin ist ein Luft- oder Raumfahrzeug mit einem erfindungsgemäßen Verriegelungssystem vorgesehen.

Eine der vorliegenden Erfindung zugrunde liegende Idee besteht darin, ein Verriegelungssystem mit einer doppelt exzentrischen Bolzenanordnung auszugestalten, die einfach gestaltet ist und in besonders praktischer Weise montiert und eingestellt werden kann. Die doppelt exzentrische Bolzenanordnung umfasst einen exzentrischen Bolzen, der im Zusammenspiel mit einer ebenfalls exzentrischen Lagerbuchse zwei unabhängige Freiheitsgrade zum Ausgleich von Toleranzen bereitstellt. Der Lagerbolzen und die Lagerbuchse sind relativ zueinander beweglich ausgebildet, sodass die Exzentrizität des Lagerbolzens je nach relativer Anordnung durch die Exzentrizität der Lagerbuchse verstärkt, abgeschwächt und/oder ergänzt werden kann, um derart für den jeweiligen Anwendungsfall in optimaler Weise vorhandene Toleranzen der Türverriegelung zu kompensieren. Um die beiden Bauteile relativ zueinander auszurichten und in der gewählten Ausrichtung zu fixieren, umfasst das System zwei Paare aus Zahnkränzen, welches jeweils aus einem Außenkranz auf einem Umfang des Lagerbolzens und einem komplementären Innenkranz bestehen. Der erste Innenzahnkranz an der Lagerbuchse erlaubt im Zusammenspiel mit dem zugehörigen Außenkranz des Lagerbolzens die Fixierung der relativen Ausrichtung von dem Lagerbolzen und der Lagerbuchse zwischen den beiden Lagerschenkeln. Der zweite Innenkranz an der Befestigungsscheibe vermittelt hingegen die Fixierung der Ausrichtung des Lagerbolzens bezogen auf den zugehörigen Lagerschenkel, d.h. den Türrahmen. Aufgrund dieser vorteilhaften Anordnung kann der Lagerbolzen in dem jeweils gegenüberliegenden Lagerschenkel einfach gelagert werden, ohne dass dort besondere Mittel zur Befestigung und/oder zur weiteren Ausrichtung des Lagerbolzens notwendig wären.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann die Lagerbuchse an einem Montageende einen Montageflansch um den Zylindermantel aufweisen, auf welchem die Riegelhülse aufsteckbar ist.

Gemäß einer Weiterbildung kann der erste Innenzahnkranz der Lagerbuchse an dem Montageende der Lagerbuchse ausgebildet sein.

Gemäß einer Weiterbildung kann der Montageflansch mit einem ersten Mehrkantprofil ausgebildet sein. Das Mehrkantprofil kann beispielsweise als Schraubenkopfantrieb für einen Schraubenschlüssel, z.B. einen Maulschlüssel oder einen Hakenschlüssel, ausgebildet sein. Die Lagerbuchse kann somit zwischen den beiden Lagerschenkeln mit einem entsprechend geformten Handwerkzeug gefasst und gedreht werden, um diese gegenüber dem Lagerbolzen auszurichten und in dem Verriegelungssystem zu justieren.

Gemäß einer Weiterbildung kann der Lagerbolzen an dem ersten Lagerende mit einem zweiten Mehrkantprofil abschließen. Entsprechend zu der Lagerbuchse kann somit auch der Lagerbolzen mit einem geeigneten Handwerkzeug verstellt werden. Beispielsweise können sowohl das erste, als auch das zweite Mehrkantprofil als Außen-Sechskant ausgebildet sein.

Gemäß einer Weiterbildung kann das erste Lagerende des Lagerbolzens zur passgenauen, gleitenden Aufnahme in dem ersten Lagerdurchgangsloch ausgebildet sein. Der Lagerbolzen kann somit unmittelbar mit dem Lagerende in dem ersten Lagerdurchgangsloch gelagert sein. Beispielsweise kann der Lagerbolzen über das erste Lagerdurchgangsloch hinausragen (bezogen auf den Zwischenraum zwischen den beiden Lagerschenkeln), wobei der erste Außenzahnkranz unmittelbar hinter dem Lagerdurchgangsloch in den zweiten Innenzahnkranz der dort an dem ersten Lagerschenkel befestigten Befestigungsscheibe eingreifen kann.

Gemäß einer Weiterbildung kann das Verriegelungssystem weiterhin eine Fixierbuchse umfassen. Die Fixierbuchse kann zur Aufnahme des zweiten Lagerendes des Lagerbolzens und zur passgenauen, gleitenden Aufnahme in dem zweiten Lagerdurchgangsloch ausgebildet sein. Die Fixierbuchse kann beispielsweise dazu dienen, den Lagerbolzen gegenüber dem zweiten Lagerschenkel festzustellen, z.B. mittels eines Rückhaltekragens, der über das zweite Lagerdurchgangsloch übersteht und die Fixierbuchse derart in dem Zwischenraum zwischen den beiden Lagerschenkeln hält.

Gemäß einer Weiterbildung kann der zweite Innenzahnkranz der Befestigungsscheibe mit einer Zahnkranzlippe senkrecht zu dem Durchgangsloch ausgebildet sein, welche den zweiten Innenzahnkranz zumindest bereichsweise entlang einer Umfangsrichtung der Befestigungsscheibe verbreitert. Der Lagerbolzen kann in dieser Ausbildung eine vorgegebene Strecke entlang seiner Längsrichtung bewegt werden, ohne dass die Rotationsfixierung des zweiten Innenzahnkranzes mit dem ersten Außenzahnkranz aufgehoben wird. Beispielsweise können die beiden Innenzahnkränze und Außenzahnkränze derart ausgebildet sein, dass die Rotationsfixierung zwischen dem Lagerbolzen und der Lagerbuchse über den ersten Innenzahnkranz und den zweiten Außenzahnkranz durch eine geringfügige axiale Bewegung des Lagerbolzens aufgehoben werden kann, um die Lagerbuchse gegenüber dem Lagerbolzen zu verstellen. Die Zahnkranzlippe kann nun derart dimensioniert sein, dass hierbei gleichzeitig jedoch die Ausrichtung des Lagerbolzens gegenüber dem ersten Lagerschenkel fixiert bleibt, d.h. die Rotationsfixierung des zweiten Innenzahnkranzes mit dem ersten Außenzahnkranz.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische perspektivische Vorderansicht eines Verriegelungssystems für eine Fahrzeugtür gemäß einer Ausführungsform der Erfindung;
- Fig. 2: schematische Seitenansicht eines Luftfahrzeugs mit dem Verriegelungssystem aus Fig. 1;
- Fig. 3: schematische geschnittene Detailansicht einer doppelt exzentrischen Bolzenanordnung aus dem Verriegelungssystem in Fig. 1;
- Fig. 4: schematische Perspektivansicht einer exzentrischen Lagerbuchse aus dem Verriegelungssystem in Fig. 1 bis 3;
- Fig. 5: schematische Perspektivansicht einer Riegelhülse aus dem Verriegelungssystem in Fig. 1 bis 3;
- Fig. 6: schematische Perspektivansicht einer Fixierbuchse aus dem Verriegelungssystem in Fig. 1 bis 3;
- Fig. 7: schematische Perspektivansicht eines exzentrischen Lagerbolzens aus dem Verriegelungssystem in Fig. 1 bis 3; und
- Fig. 8: schematische Perspektivansicht einer Befestigungsscheibe aus dem Verriegelungssystem in Fig. 1 bis 3.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

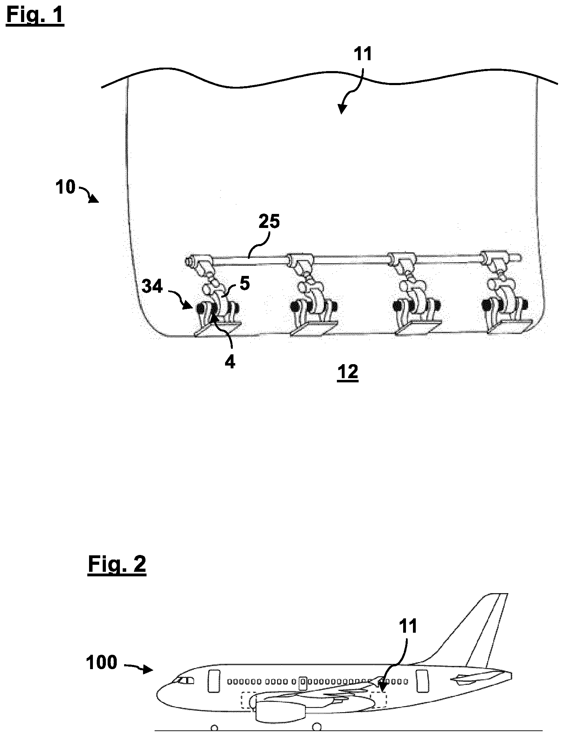

Figur 1 zeigt eine schematische perspektivische Vorderansicht eines Verriegelungssystems 10 für eine Fahrzeugtür 11 gemäß einer Ausführungsform der Erfindung.

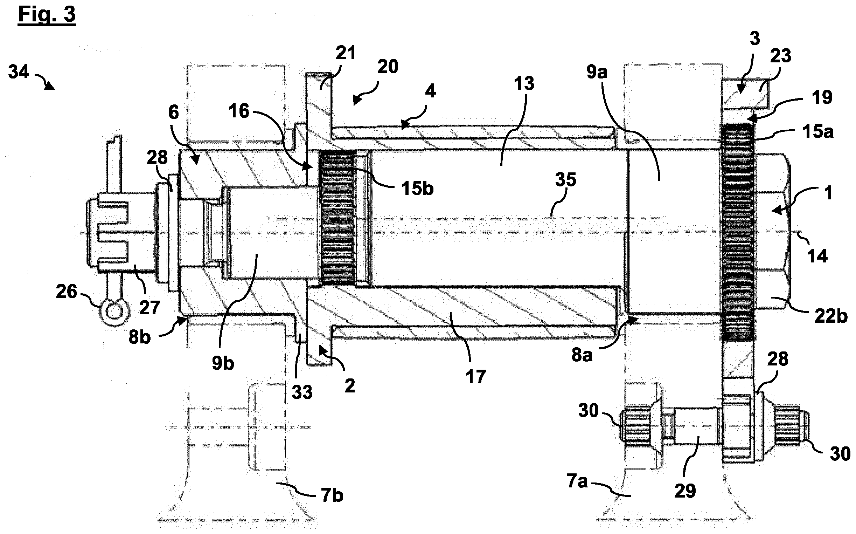

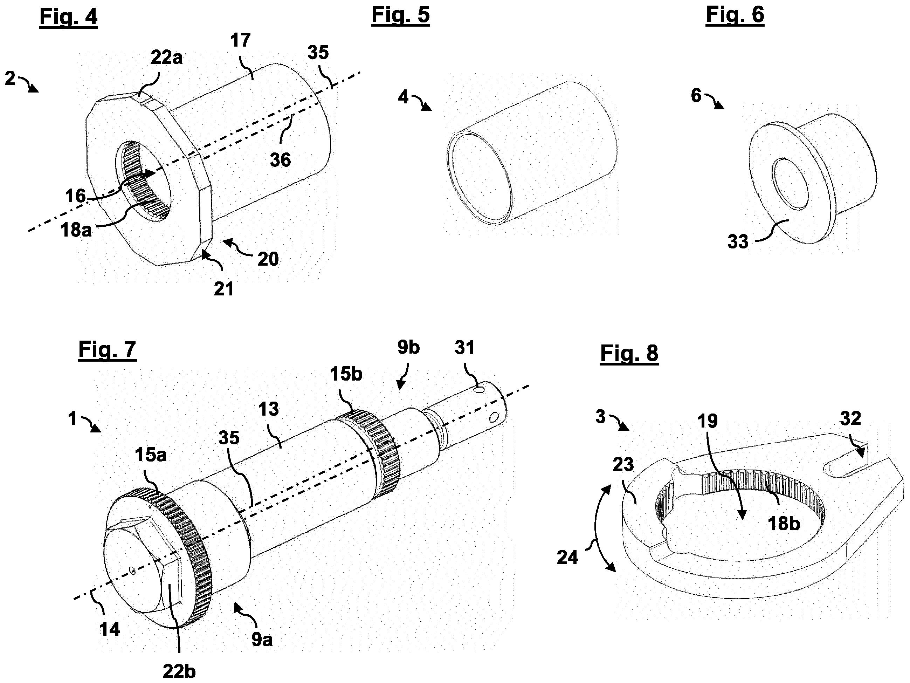

Bei der Fahrzeugtür 11 kann es sich beispielsweise um eine Frachtraumtür des in Fig. 2 gezeigten Luftfahrzeugs 100 handeln. Wie im Folgenden erläutert wird, weist das System 10 mehrere doppelt exzentrische Bolzenanordnungen 34 auf, die in flexibler und einfacher Weise einen Toleranzausgleich der Verriegelung ermöglichen. Fig. 3 zeigt eine Detailansicht einer derartigen Bolzenanordnung 34 des Verriegelungssystems 10 aus Fig. 1. Die weiteren Figuren 4 bis 8 bilden einzelne Teilkomponenten des Systems 10 in perspektivischer Ansicht ab.

Das Verriegelungssystem 10 umfasst eine Fahrzeugtür 11, welche mehrere als Haken ausgebildete Riegel 5 aufweist, die von einem lediglich schematisch angedeuteten Aktorsystem 25 bewegt werden können. In der beispielhaften Ausführung von Fig. 1 umfasst das System 10 vier solcher Riegel 5. In anderen Ausführungen sind jedoch ebenso mehr oder weniger Riegel 5 möglich, z.B. zwei oder sechs Riegel 5.

Das Verriegelungssystem 10 umfasst ferner einen Türrahmen 12, an dem für jeden Riegel 5jeweils eine zugehörige Bolzenanordnung 34 befestigt ist. Die Bolzenanordnung 34 umfasst unter anderem eine Riegelhülse 4, an die jeweils ein zugehöriger Riegel 5 zum Verriegeln der Fahrzeugtür 11 mit dem Türrahmen 12 ankoppeln kann (vgl. Fig. 3 ff.).

Bezugnehmend auf Fig. 3 bis 8 umfasst jede Bolzenanordnung 34 jeweils einen ersten Lagerschenkel 7a mit einem ersten Lagerdurchgangsloch 8a und einen zweiten Lagerschenkel 7b mit einem zweiten Lagerdurchgangsloch 8b, wobei beide Lagerschenkel 7a, 7b zur Fixierung der Bolzenanordnung 34 an dem Türrahmen 12 dienen und hierzu fest an diesem angebracht sind (vgl. Fig. 1).

Ferner umfasst die Bolzenanordnung 34 einen exzentrischen Lagerbolzen 1 mit einem ersten Lagerende 9a und einem zweiten Lagerende 9b. Das erste Lagerende 9a ist zur Aufnahme in dem ersten Lagerdurchgangsloch 8a ausgebildet, wobei das erste Lagerende 9a kreiszylinderförmig ausgebildet und passgenau an das erste Lagerdurchgangsloch 8a angepasst ist. Das zweite Lagerende 9a dient zur Aufnahme in dem zweiten Lagerdurchgangsloch 8b und ist hierzu in einer Fixierbuchse 6 gelagert, die wiederum passgenau in dem zweiten Lagerdurchgangsloch 8b eingebracht ist. Die Fixierbuchse 6 kann zur Montage in den zweiten Lagerschenkel gesteckt werden, wobei ein Rückhaltekragen 33 der Fixierbuchse 6 den Lagerbolzen 1 in dem Zwischenraum zwischen den beiden Lagerschenkeln 7a, 7b hält.

Der Lagerbolzen 1 kann grundsätzlich in den beiden Lagerdurchgangslöchern 8a, 8b um seine Längsachse 14 rotieren, wobei der Lagerbolzen 1 an den Innenwänden der Lagerdurchgangslöcher 8a, 8b entlanggleitet. Der Lagerbolzen 1 ist über eine Fixiermutter 27, eine Zwischenlegscheibe 28 und einen Fixierpin 26, der in eine Bohrung 31 des Lagerbolzens 1 eingeführt ist, rotationsfest mit der Fixierbuchse 6 verbunden.

Der Lagerbolzen 1 weist ferner einen Mittelzylinder 13 zwischen den beiden Lagerenden 9a, 9b auf, welcher exzentrisch zu der durch die beiden Lagerenden 9a, 9b führenden Längsachse 14 des Lagerbolzens 1 ausgebildet ist. Die Symmetrieachse des Mittelzylinders 13 wird hierbei durch eine Mittelzylinderachse 35 gebildet, welche leicht versetzt zu der Längsachse des Lagerbolzens 1 ist (vgl. Fig. 3 und 7). Der Mittelzylinder 13 ist somit bezogen auf die Längsachse 14 des Lagerbolzens 1 exzentrisch ausgebildet.

Die Bolzenanordnung 34 umfasst ferner eine exzentrische Lagerbuchse 2 mit einem Mitteldurchgang 16, welcher zur gleitenden Aufnahme des Mittelzylinders 13 des Lagerbolzens 1 ausgebildet ist. Die exzentrische Lagerbuchse 2 weist ferner einen Zylindermantel 17 auf, welcher den Mitteldurchgang 16 exzentrisch umgibt (vgl. insbesondere Fig. 4). Die Symmetrieachse des Zylindermantels 17 entspricht hierbei somit nicht der Mittelzylinderachse 35, sondern wird wiederum durch eine Zylindermantelachse 36 vorgegeben (vgl. Fig. 4 sowie die Dicke der Lagerbuchse 2 beidseitig der Längsachse 14 in Fig. 3).

Im Ergebnis liegt somit im Zusammenspiel zwischen dem Lagerbolzen 1 und der Lagerbuchse 2 eine doppelt exzentrische Anordnung vor, wobei durch Rotation der beiden Komponenten gegeneinander unterschiedlich exzentrische Konfigurationen eingestellt werden können, um vorhandene Toleranzen des Verriegelungssystems 10 fürjede Bolzenanordnung 34 individuell ausgleichen zu können. Beispielsweise kann der Abstand zwischen der Längsachse 14 und der Mittelzylinderachse 35 mehrere Millimeter, z.B. 2 mm, betragen. Ebenso kann der Abstand zwischen der Mittelzylinderachse 35 und der Zylindermantelachse 36 mehrere Millimeter betragen, z.B. ebenfalls 2 mm. Im Zusammenspiel kann somit einen Exzentrizität in eine Richtung zwischen 0 und maximal 4 mm eingestellt werden. Aufgrund der Tatsache, dass der Lagerbolzen 1 und die Lagerbuchse 2 unabhängig voneinander verstellt werden können, ist ein sehr flexibler Toleranzausgleich möglich.

Um den Lagerbolzen 1 komfortabel verstellen bzw. rotieren zu können, wird dieser an dem ersten Lagerende 9a mit einem Mehrkantprofil 22b abgeschlossen, z.B. ein Sechskantprofil, an welchem der Lagerbolzen 1 über einen Maulschlüssel oder dergleichen gegriffen werden kann.

Die Lagerbuchse 2 ist ebenso mit einem Mehrkantprofil 22a ausgebildet. In diesem Fall weist der Zylindermantel 17 der Lagerbuchse 2 an einem Montageende 20 einen Montageflansch 21 auf, dessen Umfang entsprechend mit dem Mehrkantprofil 22a versehen ist. Über den Montageflansch 21 kann die Lagerbuchse 2 beispielsweise auf der Fixierbuchse 6 aufsitzen. Der Montageflansch 21 bietet hierbei einen komfortable Angriffsfläche zwischen den beiden Lagerschenkeln 7a, 7b, um mit einem Schraubenschlüssel oder einem Hakenschlüssel auf die Lagerbuchse 2 einwirken zu können, um diese gegenüber dem Lagerbolzen 1 zu verstellen.

Die Bolzenanordnung 34 umfasst ferner eine Befestigungsscheibe 3, welche zur Befestigung an dem ersten Lagerschenkel 7a und mit einem Durchgangsloch 19 zur Aufnahme des ersten Lagerendes 9a des Lagerbolzens 1 ausgebildet ist. Konkret ist die Befestigungsscheibe 3 in der gezeigten Ausführung mit einem Befestigungsschlitz 32 versehen, über den diese an dem ersten Lagerschenkel 7a mittels Befestigungsmuttern 30, Zwischenlegscheiben 28 und einem Befestigungsbolzen 29 fixiert werden kann.

Der Lagerbolzen 1 weist an dem ersten Lagerende 9a einen ersten Außenzahnkranz 15a auf, der komplementär zu einem Innenzahnkranz 18b in dem Durchgangsloch 19 der Befestigungsscheibe 3 ausgebildet ist. Der Lagerbolzen 1 ragt mit dem ersten Außenzahnkranz 15a in das Durchgangsloch 19 der Befestigungsscheibe 3 hinein. Aufgrund der komplementären Ausbildung der beiden Zahnkränze 15a, 18b kann der Lagerbolzen 1 in diskreten Winkeln entlang seines Umfangs in der Befestigungsscheibe 3 und damit gegenüber dem ersten Lagerschenkel 7a, d.h. gegenüber dem Türrahmen 12, rotationsfest fixiert werden. Beispielsweise kann der Lagerbolzen 1 zur Montage zunächst mit einem Maulschlüssel über das Mehrkantprofil 22b ausgerichtet und anschließend durch Eingreifen der Zahnkränze 15a, 18b in der eingestellten Ausrichtung fixiert werden.

Entsprechend weist der Mittelzylinder 13 des Lagerbolzens 1 einen zweiten Außenzahnkranz 15b auf, der komplementär zu einem Innenzahnkranz 18a in dem Mitteldurchgang 16 der Lagerbuchse 2 ausgebildet ist. Diese beiden Zahnkränze 15b, 18a dienen nun zur rotationsfesten Fixierung des Lagerbolzens 1 relativ zu der Lagerbuchse 2. Beispielsweise kann im Anschluss an die oben geschilderte Ausrichtung des Lagerbolzens 1 relativ zu dem ersten Lagerschenkel 7a die Lagerbuchse 2 durch Einwirkung mit einem Maulschlüssel oder einem Hakenschlüssel oder dergleichen an dem entsprechenden Mehrkantprofil 22a der Lagerbuchse 2 ausgerichtet werden, bevor die beiden Zahnkränze 15b, 18a miteinander in Eingriff gebracht werden.

Ferner umfasst die Bolzenanordnung 34 eine Riegelhülse 4, welche zur gleitenden, rotierenden Aufnahme der Lagerbuchse 2 ausgebildet ist. Beispielsweise kann die Riegelhülse 4 als hohler Kreiszylinder ausgebildet sein, der auf die Lagerbuchse 2 gesteckt ist und auf dieser einseitig von dem Montageflansch 21 gehalten wird. Die Riegelhülse 4 dient hierbei als Angriffsfläche für den Riegel 5 der Verriegelung 10.

Um die Montage zu vereinfachen, ist der Innenzahnkranz 18b der Befestigungsscheibe 3 mit einer Zahnkranzlippe 23 senkrecht zu dem Durchgangsloch 19 ausgebildet. Die Zahnkranzlippe 23 verbreitert den zweiten Innenzahnkranz 18b zumindest bereichsweise entlang einer Umfangsrichtung 24 der Befestigungsscheibe 3, z.B. ein Viertelumfang (vgl. Fig. 8). Der Lagerbolzen 1 kann somit entlang seiner Längsachse 1 verschoben werden, ohne dass der Eingriff der Zahnkränze 15a, 18b an dem ersten Lagerende 9a aufgehoben wird. Gleichzeitig kann der Lagerbolzen 1 jedoch soweit verschoben werden, dass der Eingriff der Zahnkränze 15b, 18a an dem Montageende der Lagerbuchse 2 aufgehoben wird. Die Lagerbuchse 2 kann somit relativ zu dem Lagerbolzen 1 ausgerichtet werden, ohne dass die absolute Ausrichtung des Lagerbolzens 1 zu dem Türrahmen 12 geändert wird. Sobald die Lagerbuchse 2 die gewünschte Ausrichtung erreicht hat, kann der Lagerbolzen 1 wieder zurück geschoben werden, sodass nun beide Paare von Zahnkränzen 15a, 15b, 18a, 18b ineinander eingreifen bzw. einander kontaktieren. Abschließend kann der Fixierpin 26 eingesteckt werden, um die Bolzenanordnung 24 derart vollständig festzulegen.

Die obige Ausführung für eine Verriegelung einer Fahrzeugtür zeichnet sich durch geringe Komplexität, geringes Gewicht sowie niedrige Kosten aus. Außerdem ist die Montage der Anordnung besonders einfach und komfortabel.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: exzentrischer Lagerbolzen
- 2: exzentrische Lagerbuchse
- 3: Befestigungsscheibe
- 4: Riegelhülse
- 5: Riegel
- 6: Fixierbuchse
- 7a, 7b: Lagerschenkel
- 8a, 8b: Lagerdurchgangsloch
- 9a, 9b: Lagerende
- 10: Verriegelungssystem
- 11: Fahrzeugtür
- 12: Türrahmen
- 13: Mittelzylinder
- 14: Längsachse
- 15a, 15b: Außenzahnkranz
- 16: Mitteldurchgang
- 17: Zylindermantel
- 18a, 18b: Innenzahnkranz
- 19: Durchgangsloch
- 20: Montageende
- 21: Montageflansch
- 22a, 22b: Mehrkantprofil
- 23: Zahnkranzlippe
- 24: Umfangsrichtung
- 25: Aktorsystem
- 26: Fixierpin
- 27: Fixiermutter
- 28: Zwischenlegscheibe
- 29: Befestigungsbolzen
- 30: Befestigungsmutter
- 31: Bohrung
- 32: Befestigungsschlitz
- 33: Rückhaltekragen
- 34: Bolzenanordnung
- 35: Mittelzylinderachse
- 36: Zylindermantelachse
- 100: Luft- oder Raumfahrzeug

## Patentansprüche

1. Verriegelungssystem (10) mit:
einem Türrahmen (12), welcher einen ersten Lagerschenkel (7a) mit einem ersten Lagerdurchgangsloch (8a) und einen zweiten Lagerschenkel (7b) mit einem zweiten Lagerdurchgangsloch (8b) aufweist;
einem exzentrischen Lagerbolzen (1) mit einem ersten Lagerende (9a) und einem zweiten Lagerende (9b), wobei das erste Lagerende (9a) zur Aufnahme in dem ersten Lagerdurchgangsloch (8a) und das zweite Lagerende (9a) zur Aufnahme in dem zweiten Lagerdurchgangsloch (8b) ausgebildet ist,
wobei der Lagerbolzen (1) einen Mittelzylinder (13) zwischen den beiden Lagerenden (9a, 9b) aufweist, welcher exzentrisch zu einer durch die beiden Lagerenden (9a, 9b) führenden Längsachse (14) des Lagerbolzens (1) ausgebildet ist; wobei der Lagerbolzen (1) an dem ersten Lagerende (9a) einen ersten Außenzahnkranz (15a) und an dem Mittelzylinder (13) einen zweiten Außenzahnkranz (15b) aufweist;
einer exzentrischen Lagerbuchse (2) mit einem Mitteldurchgang (16), welcher zur gleitenden Aufnahme des Mittelzylinders (13) des Lagerbolzens (1) ausgebildet ist, und mit einem Zylindermantel (17), welcher den Mitteldurchgang (16) exzentrisch umgibt, wobei der Mitteldurchgang (16) einen ersten Innenzahnkranz (18a) aufweist, welcher komplementär zu dem zweiten Außenzahnkranz (15b) des Lagerbolzens (1) ausgebildet ist;
einer Befestigungsscheibe (3), welche zur Befestigung an dem ersten Lagerschenkel (7a) und mit einem Durchgangsloch (19) zur Aufnahme des ersten Lagerendes (9a) des Lagerbolzens (1) ausgebildet ist, wobei die Befestigungsscheibe (3) einen zweiten Innenzahnkranz (18b) in dem Durchgangsloch (19) aufweist, der komplementär zu dem ersten Außenzahnkranz (15a) des Lagerbolzens (1) ausgebildet ist;
einer Riegelhülse (4), welche zur gleitenden Aufnahme der Lagerbuchse (2) ausgebildet ist; und
einer Fahrzeugtür (11), welche einen Riegel (5) aufweist, der zum Umlegen um die Riegelhülse (4) zum Verriegeln der Fahrzeugtür (11) mit dem Türrahmen (12) ausgebildet ist.

2. Verriegelungssystem (10) nach Anspruch 1, wobei die Lagerbuchse (2) an einem Montageende (20) einen Montageflansch (21) um den Zylindermantel (17) aufweist, auf welchem die Riegelhülse (4) aufsteckbar ist.

3. Verriegelungssystem (10) nach Anspruch 2, wobei der erste Innenzahnkranz (18a) der Lagerbuchse (2) an dem Montageende (20) der Lagerbuchse (2) ausgebildet ist.

4. Verriegelungssystem (10) nach Anspruch 2 oder 3, wobei der Montageflansch (21) mit einem ersten Mehrkantprofil (22a) ausgebildet ist.

5. Verriegelungssystem (10) nach einem der Ansprüche 1 bis 4, wobei der Lagerbolzen an dem ersten Lagerende (9a) mit einem zweiten Mehrkantprofil (22b) abschließt.

6. Verriegelungssystem (10) nach einem der Ansprüche 1 bis 5, wobei das erste Lagerende (9a) des Lagerbolzens (1) zur passgenauen, gleitenden Aufnahme in dem ersten Lagerdurchgangsloch (8a) ausgebildet ist.

7. Verriegelungssystem (10) nach einem der Ansprüche 1 bis 6, weiterhin mit: einer Fixierbuchse (6), die zur Aufnahme des zweiten Lagerendes (9b) des Lagerbolzens (1) und zur passgenauen, gleitenden Aufnahme in dem zweiten Lagerdurchgangsloch (8b) ausgebildet ist.

8. Verriegelungssystem (10) nach einem der Ansprüche 1 bis 7, wobei der zweite Innenzahnkranz (18b) der Befestigungsscheibe (3) mit einer Zahnkranzlippe (23) senkrecht zu dem Durchgangsloch (19) ausgebildet ist, welche den zweiten Innenzahnkranz (18b) zumindest bereichsweise entlang einer Umfangsrichtung (24) der Befestigungsscheibe (3) verbreitert.

9. Luft- oder Raumfahrzeug (100) mit einem Verriegelungssystem (10) nach einem der Ansprüche 1 bis 8.

## Claims

1. Locking system (10) having:
a door frame (12), which has a first bearing limb (7a) with a first bearing through-hole (8a) and a second bearing limb (7b) with a second bearing through-hole (8b);
an eccentric bearing bolt (1) with a first bearing end (9a) and a second bearing end (9b), wherein the first bearing end (9a) is designed to be accommodated in the first bearing through-hole (8a) and a second bearing end (9a) is designed to be accommodated in the second bearing through-hole (8b), wherein the bearing bolt (1) has a central cylinder (13) between the two bearing ends (9a, 9b), the central cylinder being designed eccentrically in relation to a longitudinal axis (14) of the bearing bolt (1), said axis leading through the two bearing ends (9a, 9b); wherein the bearing bolt (1) has a first external toothing ring (15a) at the first bearing end (9a) and a second external toothing ring (15b) on the central cylinder (13);
an eccentric bearing bushing (2) with a central through-passage (16), which is designed to accommodate the central cylinder (13) of the bearing bolt (1) for sliding action, and with a lateral cylinder surface (17), which surrounds the central through-passage (16) eccentrically, wherein the central through-passage (16) has a first internal toothing ring (18a), which is designed to complement the second external toothing ring (15b) of the bearing bolt (1);
a fastening disc (3), which is designed for fastening on the first bearing limb (7a) and with a through-hole (19) for accommodating the first bearing end (9a) of the bearing bolt (1), wherein the fastening disc (3) has a second internal toothing ring (18b) in the through-hole (19), the second internal toothing ring being designed to complement the first external toothing ring (15a) of the bearing bolt (1);
a catch sleeve (4), which is designed to accommodate the bearing bushing (2) for sliding action; and
a vehicle door (11), which has a catch (5) which is designed to be swung around the catch sleeve (4) for the purpose of locking the vehicle door (11) to the door frame (12).

2. Locking system (10) according to Claim 1, wherein, at an installation end (20), the bearing bushing (2) has an installation flange (21) around the lateral cylinder surface (17), on which the catch sleeve (4) can be fitted.

3. Locking system (10) according to Claim 2, wherein the first internal toothing ring (18a) of the bearing bushing (2) is formed at the installation end (20) of the bearing bushing (2).

4. Locking system (10) according to Claim 2 or 3, wherein the installation flange (21) is formed with a first polygonal profile (22a).

5. Locking system (10) according to one of Claims 1 to 4, wherein the bearing bolt terminates at the first bearing end (9a) with a second polygonal profile (22b).

6. Locking system (10) according to one of Claims 1 to 5, wherein the first bearing end (9a) of the bearing bolt (1) is designed to be accommodated in a precisely fitting manner, and with sliding action, in the first bearing through-hole (8a).

7. Locking system (10) according to one of Claims 1 to 6, also having:
a fixing bushing (6), which is designed to accommodate the second bearing end (9b) of the bearing bolt (1) and to be accommodated in a precisely fitting manner, and for sliding action, in the second bearing through-hole (8b).

8. Locking system (10) according to one of Claims 1 to 7, wherein the second internal toothing ring (18b) of the fastening disc (3) is designed with a toothing-ring lip (23) in a direction perpendicular to the through-hole (19), the toothing-ring lip widening the second internal toothing ring (18b) at least in certain regions along a circumferential direction (24) of the fastening disc (3).

9. Aircraft or spacecraft (100) having a locking system (10) according to one of Claims 1 to 8.

## Revendications

1. Système de verrouillage (10), comprenant :
un cadre de porte (12), qui comprend une première branche de palier (7a) munie d'un premier trou traversant de palier (8a) et une deuxième branche de palier (7b) munie d'un deuxième trou traversant de palier (8b) ;
un axe de palier excentrique (1) muni d'une première extrémité de palier (9a) et d'une deuxième extrémité de palier (9b), la première extrémité de palier (9a) étant configurée pour loger dans le premier trou traversant de palier (8a) et la deuxième extrémité de palier (9a) étant configurée pour loger dans le deuxième trou traversant de palier (8b), l'axe de palier (1) comprenant un cylindre central (13) entre les deux extrémités de palier (9a, 9b), qui est configuré sous forme excentrique par rapport à un arbre longitudinal (14) de l'axe de palier (1) passant à travers les deux extrémités de palier (9a, 9b) ; l'axe de palier (1) comprenant une première couronne dentée extérieure (15a) sur la première extrémité de palier (9a) et une deuxième couronne dentée extérieure (15b) sur le cylindre central (13) ;
une bague de palier excentrique (2) munie d'un passage central (16), qui est configuré pour loger en coulissement le cylindre central (13) de l'axe de palier (1), et munie d'une enveloppe cylindrique (17), qui entoure de manière excentrique le passage central (16), le passage central (16) comprenant une première couronne dentée intérieure (18a), qui est configurée de manière complémentaire par rapport à la deuxième couronne dentée extérieure (15b) de l'axe de palier (1) ;
un disque de fixation (3), qui est configuré pour être fixé sur la première branche de palier (7a) et avec un trou traversant (19) pour loger la première extrémité de palier (9a) de l'axe de palier (1), le disque de fixation (3) comprenant une deuxième couronne dentée intérieure (18b) dans le trou traversant (19), qui est configurée sous forme complémentaire par rapport à la première couronne dentée extérieure (15a) de l'axe de palier (1) ;
une douille de verrouillage (4), qui est configurée pour loger en coulissement la bague de palier (2) ; et
une porte de véhicule (11), qui comprend un verrou (5), qui est configuré pour être rabattu autour de la douille de verrouillage (4) pour le verrouillage de la porte de véhicule (11) avec le cadre de porte (12).

2. Système de verrouillage (10) selon la revendication 1, dans lequel la bague de palier (2) comprend à une extrémité de montage (20) une bride de montage (21) autour de l'enveloppe cylindrique (17), sur laquelle la douille de verrouillage (4) peut être emboîtée.

3. Système de verrouillage (10) selon la revendication 2, dans lequel la première couronne dentée intérieure (18a) de la bague de palier (2) est formée à l'extrémité de montage (20) de la bague de palier (2).

4. Système de verrouillage (10) selon la revendication 2 ou 3, dans lequel la bride de montage (21) est configurée avec un premier profil polygonal (22a) .

5. Système de verrouillage (10) selon l'une quelconque des revendications 1 à 4, dans lequel l'axe de palier se termine à la première extrémité de palier (9a) avec un deuxième profil polygonal (22b).

6. Système de verrouillage (10) selon l'une quelconque des revendications 1 à 5, dans lequel la première extrémité de palier (9a) de l'axe de palier (1) est configurée pour loger en coulissement, de manière ajustée, dans le premier trou traversant de palier (8a).

7. Système de verrouillage (10) selon l'une quelconque des revendications 1 à 6, comprenant en outre :
une bague de fixation (6), qui est configurée pour loger la deuxième extrémité de palier (9b) de l'axe de palier (1) et pour loger en coulissement, de manière ajustée, dans le deuxième trou traversant de palier (8b) .

8. Système de verrouillage (10) selon l'une quelconque des revendications 1 à 7, dans lequel la deuxième couronne dentée intérieure (18b) du disque de fixation (3) est configurée avec une lèvre de couronne dentée (23) perpendiculairement au trou traversant (19), qui élargit la deuxième couronne dentée intérieure (18b) au moins en zones le long d'une direction circonférentielle (24) du disque de fixation (3) .

9. Véhicule aérien ou spatial (100) muni d'un système de verrouillage (10) selon l'une quelconque des revendications 1 à 8.
